# EUROPEAN PATENT SPECIFICATION

(11) **EP 2 645 873 B1**
(45) Date of publication and mention of the grant of the patent: **17.09.2014**
(21) Application number: 11772980.6
(22) Date of filing: 21.10.2011
(51) Int. Cl.: A23G 9/04, A23L 1/308, A23G 9/42, A23G 9/36

(54) **FROZEN CONFECTIONS COMPRISING CITRUS FIBRE**
GEFRORENE SÜßWAREN MIT ZITRONENFASER
CONFISERIES CONGELÉES COMPRENANT DES FIBRES D'AGRUME

(30) Priority: 02.12.2010 EP 10193413
(43) Date of publication of application: 09.10.2013
(73) Proprietor: Unilever PLC, London, Greater London EC4Y 0DY (GB); Unilever N.V., 3013 AL Rotterdam (NL)
(72) Inventor: JUDGE, David, John, Bedford Bedfordshire MK44 1LQ (GB); LITCHFIELD, Timothy, John, Bedford Bedfordshire MK44 1LQ (GB); WIX, Loyd, Bedford Bedfordshire MK44 1LQ (GB)
(74) Representative: Warner, Guy Jonathan
(86) International application number: PCT/EP2011/068430
(87) International publication number: WO 2012/072335

(56) References cited:
- EP-A1- 0 824 872
- EP-A1- 2 025 240
- US-A1- 2004 086 626
- US-A1- 2006 115 564

## Description

### Technical field

The present invention relates to frozen confections containing citrus fibre, in particular it relates to frozen confections containing citrus fibre that has enhanced functionality.

### Background

Stabilisers are typically polysaccharides and are used in frozen confections to maintain the viscosity of compositions. Stabilisers are also useful for maintaining the physio-chemical state of compositions and they can contribute to desirable, uniform product characteristics and a smooth feel on consumption. They also improve the handling properties of products during manufacture and dispensing.

Ingredients that provide such stabilisation effects are therefore indispensable to the manufacture of commercially acceptable frozen confection products and although efficient stabiliser systems do exist, they are often chemically modified ingredients and/or they appear on the ingredients labelling of products as additives or as "E numbers". Consumers are becoming increasingly concerned about ingredients used in their products and in some cases the perception is that any additives should be avoided and natural ingredients are preferred. Certain natural stabilisation systems do exist and one such stabiliser is citrus fibre which is used in products such as baked goods, confectionary, jams and the like as disclosed in US 2006/0115564. Citrus fibre is a consumer-acceptable stabiliser ingredient due to its natural origins but it would still be advantageous to improve the performance of this ingredient in order to increase its stabilizing functionality and to allow less of this additive to be used in products.

### Summary of invention

We have now found that the stabilising functionality of citrus fibre in frozen confections can be enhanced by treating the citrus fibre with a particular class of enzymes.

Accordingly, in a first aspect the invention provides a frozen confection comprising citrus fibre, characterised in that the citrus fibre has been treated with a glycosidase enzyme.

Preferably the enzyme is a cellulase, a mannanase or a mixture thereof.

Preferably the frozen confection comprises from 0.01 to 5 wt% of citrus fibre.

Preferably the frozen confection contains at most 0.1wt% of another stabiliser, more preferably at most 0.05wt%, more preferably still none.

Preferably the frozen confection is an ice cream, water ice, frozen yoghurt, or sorbet.

In a second aspect the invention provides a process for the production of a frozen confection comprising the steps of:
a) contacting citrus fibre with a glycosidase enzyme;
b) combining the citrus fibre with the other ingredients of the frozen confection to form a mix;
c) homogenising the mix at a pressure of from 50 to 500 bar; and
d) freezing the mix to form the frozen confection,
   wherein step a) can take place before, during or after step b).

Preferably the citrus fibre is contacted with the enzyme for between 10 seconds and 2 hours.

Preferably the citrus fibre is contacted with the enzyme at a pH of from 4.0 to 7.0.

Preferably the citrus fibre is contacted with the enzyme at a temperature of from 10°C to 70°C.

Preferably the citrus fibre is contacted with the enzyme after step c).

Preferably the enzyme is deactivated after being contacted with the citrus fibre.

Preferably the enzyme is a cellulase, a mannanase or a mixture thereof.

In a third aspect the invention provides the use of citrus fibre that has been treated with a glycosidase enzyme for enhancing the stabilisation of a frozen confection.

Preferably the enzyme is a cellulase, a mannanase or a mixture thereof.

Preferably the frozen confection is an ice cream, water ice, frozen yoghurt, or sorbet.

### Detailed description of invention

All percentages, unless otherwise stated, refer to the percentage by weight, with the exception of percentages cited in relation to the overrun.

Citrus fibre is widely used in food and personal care products for its stabilising properties. One example of a commercially available citrus fibre is Herbacel AQ Plus Citrus N from Herbafood Ingredients, Germany. Typically citrus fibre has a total dietary fibre content of from 60 to 85 wt % (dry weight) and a water binding capacity (i.e. the amount of water that can be taken up by the fibre) of from 7 to 25 (w/w). The citrus fibre typically comprises up to 10% (w/w) proteins. Preferably the citrus fibre has a total dietary fibre content of from 60 to 80 wt % and a water binding capacity of from 7 to 12 (w/w). Citrus fibre may be obtained from citrus fruits such as oranges, tangerines, limes, lemons and grapefruit and in a preferred embodiment the citrus fibre is orange fibre. Citrus fibre can be extracted from citrus vesicles i.e. the cellulosic material contained in the inner, juice-containing portion of citrus fruits. Citrus vesicles are also referred to as coarse pulp, floaters, citrus cells, floating pulp or pulp. Citrus fibre typically has a relatively high total dietary fibre content and a balanced ratio of soluble to insoluble dietary fibre. For example, the total dietary fibre preferably is made up of about 45-50% soluble dietary fibre and from 50-55% insoluble dietary fibre. It is believed that the balanced dietary fibre spectrum of insoluble (structural) and soluble (mainly pectin) fibre is advantageous in providing the stabilisation effects.

In the typical manufacture of frozen confections, liquid ingredients are dosed into a mixing tank and heated to approximately 65°C with stirring. If stabilisers are used they are typically blended with the other dry ingredients and this blend is then added to the liquid ingredients and the resulting mix is heated back to approximately 65°C to ensure complete dispersion.

In the manufacture of frozen confections containing citrus fibre, the citrus fibre itself is subjected to physical forces to ensure that it can be dispersed within the frozen confection mixture during processing. This subjection to physical forces is typically carried out by subjecting an aqueous mixture of the citrus fibre to high pressure treatment, preferably homogenisation at a pressure of at least 50 bar, preferably at least 100 bar, more preferably at least 140 bar and at most 500 bar, preferably at most 400 bar, more preferably at most 300 bar. The citrus fibre can be subjected to such high pressure treatment at any point in the manufacturing process prior to freezing but in a preferred embodiment this high pressure treatment takes place during the standard homogenisation step of the mix preparation.

In this standard homogenisation step of the mix preparation of frozen confections high-pressure homogenisation apparatus is typically used at a pressure of at least 100 bar. The homogenised mix is optionally pasteurised, cooled to around 4°C, and aged at 2-4°C. The mix is then frozen and optionally aerated before being dispensed as a frozen confection.

Enzymatic treatment of citrus fibre has been disclosed previously, for example in US 5,965,177 which discloses a method of producing a clouding agent from citrus membrane and/or peel for use in fruit juices and soft drink beverages. However, this disclosure relates only to fruit juices and soft drink beverages and makes no mention of improving the performance of citrus fibre in frozen confections nor does it discuss stabilising functionality.

We have now surprisingly discovered that when citrus fibre is treated with specific enzymes, its performance as a stabiliser in frozen confections is enhanced. It is believed that the cellulosic material contained in the citrus fibres is partially broken down by the action of the enzymes and the ability of the citrus fibre to bind water and other components of the products to which it is added is enhanced as a result. Cellulose is a straight chain polymer derived from D-glucose units, which condense through β(1-4)-glycosidic bonds. Such glycosidic bonds are known as O-glycosidic bonds, in reference to the glycosidic oxygen that links the glucose units of the cellulose polymer. It is believed that the cellulosic material of citrus fibre is broken down via a hydrolysis reaction in the presence of particular enzymes that cleave the glycosidic bonds of the cellulose polymers. The family of enzymes that cleave these glycosidic linkages are the glycosidases (also known as glycoside hydrolases) which are classified into Enzyme Commission (EC) number 3.2.1 as enzymes hydrolysing O-or S-glycosyl compounds. Particularly suitable for this invention are the glycosidases that hydrolyse O-glycosyl compounds and most preferable are enzymes selected from the group consisting of cellulase (EC 3.2.1.4), cellulose 1,4-β-cellobiosidase (EC 3.2.1.91) and mannanase (EC 3.2.1.25). In a particularly preferred embodiment the enzyme is a cellulase.

As used herein, the term "treated with a glycosidase enzyme" means that the citrus fibre has been partially hydrolysed by the glycosidase. Citrus fibre can be readily treated with the glycosidase enzyme using standard techniques and, in fact, it has been found that merely contacting the citrus fibre with a glycosidase for a relatively short period of time is sufficient to treat the citrus fibre and thereby improve the stabilising performance. The citrus fibre is therefore preferably contacted with a glycosidase enzyme for at least 10 seconds, more preferably at least 30 seconds, more preferably still at least 1 minute, yet more preferably still at least 5 minutes. Preferably the citrus fibre is contacted with a glycosidase for at most 2 hours, more preferably at most 1 hour, more preferably still at most 30 minutes. The amount of contact time necessary will depend on the speed of the reaction which, in turn, depends on the reaction conditions such as temperature and pH. The optimal reaction conditions for glycosidases are well known and in particular it is preferred that the citrus fibre is contacted with a glycosidase at a temperature of at least 10°C, more preferably at least 20°C, more preferably still at least 30°C. Preferably the temperature is at most 60°C, more preferably at most 50°C, more preferably still at most 40°C. Preferably the citrus fibre is contacted with a glycosidase at a pH of at least 4.0, more preferably at least 4.5 and preferably at most 7.0, more preferably at most 6.5, more preferably still at most 5.5. When the citrus fibre is contacted with a glycosidase the ratio of citrus fibre to enzyme is preferably at least 1:0.1, more preferably at least 1:0.01, more preferably still at least 1:0.001 and preferably at most 1:0.00001, more preferably at most 1:0.0001.

The citrus fibre can be treated with the enzyme at various stages during the manufacturing process as described below.

As used herein, the term "frozen confection" means an edible confection made by freezing a mix of ingredients which includes water. Frozen confections typically contain fat, non-fat milk solids and sugars, together with other minor ingredients such as stabilisers, emulsifiers, colours and flavourings. Preferred frozen confections include ice cream, water ice, frozen yoghurt, sorbet and the like.

When used in frozen confections, citrus fibre is typically present in an amount of at least 0.01 wt% of the product, preferably at least 0.1 wt %, more preferably at least 0.5 wt%. Typically such products contain at most 5 wt% citrus fibre, preferably at most 4 wt%, more preferably 2 wt%. If the citrus fibre and enzymes are present together in the product then the ratio of citrus fibre to enzyme is preferably at least 1:0.1, more preferably at least 1:0.01, more preferably still at least 1:0.001 and preferably at most 1:0.00001, more preferably at most 1:0.0001.

In a process for the production of a frozen confection, the citrus fibre is brought into contact with a glycosidase enzyme to bring about partial hydrolysis of the citrus fibre.

The citrus fibre can be treated with the enzyme at various stages of the manufacturing process. For example, the citrus fibre can be treated with the enzyme in an initial and separate processing step before being combined with other ingredients of the product. Alternatively, the reaction between the citrus fibre and enzyme can take place within the product itself, that is to say the citrus fibre and the enzyme are combined with the other ingredients at which point the fibre and enzyme are contacted and the reaction takes place. This reaction can be controlled through the conditions within the product itself. For example, if the temperature is kept low - such as in a chilled product - then the reaction will take place more slowly than in a product at ambient temperatures and, accordingly, a longer reaction time will be required. The enzyme and citrus fibre can be left to react indefinitely but preferably the length of the reaction time is controlled by inactivating the enzyme after a suitable period of time. In one embodiment the product can be subjected to high temperatures (e.g. as part of a pasteurisation step) which denatures the enzyme and ensures that the reaction is controlled and also provides a product free from active enzymes. In another embodiment, the product can be frozen which will slow the reaction rate of the enzyme down to a negligible level.

In a further embodiment the citrus fibre and enzyme can be kept separate through the use of encapsulation or microencapsulation allowing the consumer to control the reaction - for example a mix may contain standard ingredients and a sachet containing the enzyme which can be added to the other ingredients during preparation. Alternatively the ingredients could be kept substantially dry whereby the reaction will only take place upon the addition of water - for example a frozen confection mix which is desiccated but upon addition of warm water during the normal preparation steps the enzyme and citrus fibres will be able to react.

In another embodiment the citrus fibre is contacted with the enzyme after the citrus fibre has been subjected to high pressure treatment as described above. In a further preferred embodiment, the citrus fibre is contacted with the enzyme after the citrus fibre has been combined with the other ingredients of the frozen confection and homogenised.

Citrus fibres treated with glycosidase enzymes are particularly suitable for use in frozen confections because they have enhanced stabilising functionality and hence the stability of frozen confections is also enhanced. One of the benefits of this invention is that all aspects of the standard manufacturing process may still be employed and so standard processes, ingredients and apparatus may be employed when making products comprising citrus fibres treated with glycosidase enzymes yet the end product still benefits from an improvement in stability

The present invention will now be further described with reference to the following non-limiting examples.

### Experiments

Stabilisers are commonly used in the production of frozen confections to provide various product characteristics including viscosity, improved shape retention and resistance to meltdown. In this experiment, five stabilisers were tested both in their native form and after treatment with glycosidases (cellulose, mannanase and a combination thereof). The stabilisers and their sources were as follows:
Sodium alginate: Grinstead® Alginate IC 313 B from Danisco.
Locust bean gum: Grinstead® LBG 246 from Danisco.
Citrus Fibre: Herbacel AQ Plus Citrus N from Herbafood ingredients, Germany.
Carboxymethylcellulose: FMC CMC 100 E from FMC International, Ireland.
Carrageenan: Carrageenan E407, SATIAGEL™ from Cargill.

The enzymes and their sources were as follows:
Cellulase: 1,4-(1,3:1,4)-β-D-Glucan 4-glucano-hydrolase, C2730 Celluclast ^{®} from Sigma-Aldrich.
Mannanase: Mannaway from Novozymes.

**Table 1**

| **Ingredient (wt%)** | **Formulation** | | | | |
|---|---|---|---|---|---|
| | **A** | **B** | **C** | **D** | **1** |
| Sodium alginate | 0.23 | | | | |
| Locust bean gum | | 0.3 | | | |
| Carboxymethylcellulose | | | 0.4 | | |
| Carrageenan | | | | 0.3 | |
| Citrus fibre | | | | | 0.75 |
| Skim milk powder | 8.22 | 8.22 | 8.22 | 8.22 | 8.22 |
| C* F017y4 Glucose-Fructose Syrup (63DE) (from Cerestar) | 10 | 10 | 10 | 10 | 10 |
| Sucrose | 11.5 | 11.5 | 11.5 | 11.5 | 11.5 |
| Water | To 100 | To 100 | To 100 | To 100 | To 100 |

**Table 1 -** Formulation of frozen confections for meltdown tests.

Zero-fat ice creams according to the formulations of Table 1 were prepared. Formulations A to D were comparative examples containing as stabilisers, sodium alginate, locust bean gum, carboxymethylcellulose, and carrageenan respectively. Formulation 1 contained citrus fibre as the stabiliser. The amount of stabiliser used in each formulation was based on the standard levels required to manufacture consumer-acceptable zero-fat ice creams products.

For each formulation, liquid ingredients were dosed into a mixing tank and heated to 65°C with stirring. The stabilisers were first dry mixed with at least an equal weight of sugar before adding to the tank. The remaining dry ingredients were then added to the tank and the mix was heated back to 65°C to ensure complete dispersion. The mix was then homogenised using an APV Crepaco homogeniser at a pressure of 140bar. The homogenised mix exited the homogeniser at a temperature of approximately 80°C. In the case of formulation 1, this homogenisation step served to high-pressure treat the citrus fibre. The homogenised mix was immediately pasteurised at 84°C for 25 seconds, and then cooled to 4°C using a plate heat exchanger. The mixes were then transferred to plastic containers and held there at 2-4°C for 6 hours.

In order to assess the effect of enzyme treatment on each of the formulations, four 20kg samples were dispensed for each formulation after the homogenisation step. The first of these samples had 0.125wt% Celluclast combined into the mix, to the second was added 0.125wt% Mannaway, to the third was added 0.125wt% Celluclast and 0.125wt% Mannaway. The final sample had no enzymes added and was used as a control. After addition of the enzymes, the mixes were left to stand for 15 minutes and then passed from their containers into an APV Technohoy MF75 freezer (via the hopper) and aerated to an overrun of 100% and frozen before being dispensed at approximately -5°C. The resulting ice cream was collected in cartons and transferred to a blast freezer where the products were hardened at -30°C for 2 hours. The ice creams were then transferred to a -25°C cold room for storage.

The samples were taken from the cold room and duplicate 500ml blocks of each formulation were cut, weighed and placed on a wire mesh grid in an enclosed cabinet that was held at 24°C. A funnel was placed underneath the blocks and the blocks were then allowed to melt. The funnel collected the melting ice cream which drained into a beaker placed on a balance. The weight of the melted ice cream was recorded and the % mass loss after 2 hours was calculated. The % mass loss of the samples as measured after 2 hours is given in Table 2. In order to quantify the effect of the enzymatic treatment of the stabilisers on the meltdown of the compositions, the percentage change in mass loss between the controls and enzymatically treated samples was calculated, using the formula below. Any improvements in mass loss relative to the control will result in a positive percentage change whereas any worsening of the mass loss will provide a negative number. These results are also shown in Table 2.

**Table 0002**

| Change in mass loss between | Mass loss of control | Mass loss of enzymatically | |
|---|---|---|---|
| control and enzymatically | after 2hrs | treated sample | x 100 |
| treated sample (%) | (%) | after 2hrs (%) | |
| | Mass loss of control after 2hrs (%) | | |

**Table 2**

| **Enzyme Treatment** | **% mass loss after 2 hours (% change in mass loss between control and enzymatically treated sample)** | | | | |
|---|---|---|---|---|---|
| | **A** | **B** | **C** | **D** | **1** |
| Control | 75 | 22 | 78 | 11 | 40 |
| Cellulase | 70 (7) | 95 (-331) | 88 (-13) | 9 (18) | 27 (32) |
| Mannanase | 70 (7) | 92 (-318) | 80 (-3) | 14 (-27) | 28 (30) |
| Cellulase + Mannanase | 70 (7) | 95 (-331) | 84 (-8) | 11 (0) | 21 (48) |

**Table 2 -** Results of meltdown tests.

The results show that the treatment of the formulations of A (sodium alginate), C (carboxymethylcellulose), and D (carrageenan) with cellulase, mannanase or a combination thereof did not have any appreciable impact on the melt down properties of the frozen confections. Sodium alginate performance was slightly improved with all enzymes but the improvement was less than 10%. The performance of carboxymethylcellulose was worse with all treatments and although cellulose caused a slight improvement in the performance of carrageenan, mannanase had the opposite effect.

It can clearly be seen that the enzymatic treatment of formulation B (locust bean gum) had a dramatic and deleterious effect on the melt down properties. The stabilisation provided by the locust bean gum resulted in very little mass loss after 2 hours in the control sample but the enzymatically treatment samples suffered over 300% more mass loss and had almost completely melted over the same period. However, the enzymatic treatment of citrus fibre (formulation 1) greatly improved the meltdown performance compared to the control. After 2 hours, 40% of the control sample had melted whereas those samples prepared with enzymatically treated citrus fibre suffered from 30 to almost 50% less mass loss.

Furthermore, the frozen confections of formulation 1 were subjected to informal tasting panels and were found to have organoleptic properties equivalent to conventional products.

It can therefore be readily appreciated that the performance of citrus fibre as a stabiliser is enhanced by treatment with glycosidase enzymes and that this enhancement is particular to citrus fibre and was not displayed in the other stabilisers tested.

## Claims

1. A frozen confection comprising citrus fibre, **characterised in that** the citrus fibre has been treated with a glycosidase enzyme.

2. A product according to claim 1 wherein the enzyme is a cellulase, a mannanase or a mixture thereof.

3. A product according to claim 1 or claim 2 wherein the enzyme is a cellulase.

4. A product according to any of the preceding claims wherein the product comprises from 0.01 to 5 wt% of citrus fibre.

5. A product according to any of the preceding claims wherein the product comprises no other stabiliser.

6. A product according to any of the preceding claims wherein the product is an ice cream.

7. A process for the production of a frozen confection comprising the steps of:
a) contacting citrus fibre with a glycosidase enzyme;
b) combining the citrus fibre with the other ingredients of the frozen confection to form a mix;
c) homogenising the mix at a pressure of from 50 to 500 bar; and
d) freezing the mix to form the frozen confection,
wherein step a) can take place before, during or after step b).

8. A process according to claim 7 wherein the citrus fibre is contacted with the enzyme for between 10 seconds and 2 hours.

9. A process according to claim 7 or claim 8 wherein the citrus fibre is contacted with the enzyme after step c).

10. A process according to any of claims 7 to 9 wherein the enzyme is deactivated after being contacted with the citrus fibre.

11. A process according to any of claims 1 to 10 wherein the enzyme is a cellulase, a mannanase or a mixture thereof.

12. Use of citrus fibre that has been treated with a glycosidase enzyme for enhancing the stabilisation of a frozen confection.

13. A use according to claim 12 wherein the enzyme is a cellulase, a mannanase or a mixture thereof.

14. A use according to claim 12 or claim 13 wherein the frozen confection is an ice cream.

## Patentansprüche

1. Gefrorenes Konfekt, das Citrusfasern aufweist,
**dadurch gekennzeichnet, dass** die Citrusfasern mit einem Glycosidase-Enzym behandelt worden sind.

2. Produkt nach Anspruch 1,
wobei das Enzym Cellulase, Mannanase oder ein Gemisch davon ist.

3. Produkt nach Anspruch 1 oder 2,
wobei das Enzym Cellulase ist.

4. Produkt nach einem der vorstehenden Ansprüche,
wobei das Produkt 0,01 bis 5 Gew.-% Citrusfasern aufweist.

5. Produkt nach einem der vorstehenden Ansprüche,
wobei das Produkt keinen weiteren Stabilisator aufweist.

6. Produkt nach einem der vorstehenden Ansprüche,
wobei das Produkt Eiscreme ist.

7. Verfahren zum Herstellen von gefrorenem Konfekt,
das die folgenden Schritte aufweist:
a) Inkontaktbringen der Citrusfasern mit einem Glycosidase-Enzym;
b) Mischen der Citrusfasern mit den anderen Bestandteilen des gefrorenen Konfekts, um ein Gemisch zu erzeugen;
c) Homogenisieren des Gemischs bei einem Druck von 50 bis 500 bar; und
d) Gefrieren des Gemischs, um gefrorenes Konfekt zu erzeugen,
wobei der Schritt a) vor, beim oder nach dem Schritt b) erfolgen kann.

8. Verfahren nach Anspruch 7,
wobei die Citrusfasern 10 Sekunden bis 2 Stunden mit dem Enzym in Kontakt gebracht werden.

9. Verfahren nach Anspruch 7 oder 8,
wobei die Citrusfasern nach dem Schritt c) mit dem Enzym in Kontakt gebracht werden.

10. Verfahren nach einem der Ansprüche 7 bis 9,
wobei das Enzym nach dem Kontakt mit den Citrusfasern deaktiviert wird.

11. Verfahren nach einem der Ansprüche 1 bis 10,
wobei das Enzym Cellulase, Mannanase oder ein Gemisch davon ist.

12. Verwendung von Citrusfasern, die mit einem Glycosidase-Enzym behandelt worden sind, um die Stabilisierung von gefrorenem Konfekt zu verbessern.

13. Verwendung nach Anspruch 12,
wobei das Enzym Cellulase, Mannanase oder ein Gemisch davon ist.

14. Verwendung nach Anspruch 12 oder 13,
wobei das gefrorene Konfekt Eiscreme ist.

## Revendications

1. Confiserie congelée comprenant une fibre d'agrume, **caractérisée en ce que** la fibre d'agrume a été traitée avec une enzyme de glycosidase.

2. Produit selon la revendication 1, dans lequel l'enzyme est une cellulase, une mannanase ou un mélange de celles-ci.

3. Produit selon la revendication 1 ou la revendication 2, dans lequel l'enzyme est une cellulase.

4. Produit selon l'une quelconque des revendications précédentes, dans lequel le produit comprend de 0,01 à 5 % en masse de fibre d'agrume.

5. Produit selon l'une quelconque des revendications précédentes, dans lequel le produit ne comprend pas d'autre stabilisant.

6. Produit selon l'une quelconque des revendications précédentes, dans lequel le produit est une crème glacée.

7. Procédé pour la production d'une pâtisserie congelée comprenant les étapes consistant :
a) à mettre une fibre d'agrume en contact avec une enzyme de glycosidase ;
b) à combiner la fibre d'agrume avec les autres ingrédients dans la pâtisserie congelée pour former un mélange ;
c) à homogénéiser le mélange à une pression de 50 à 500 bar ;
et
d) à congeler le mélange pour former la pâtisserie congelée, dans lequel l'étape a) peut avoir lieu avant, pendant ou après l'étape b)

8. Procédé selon la revendication 7, dans lequel la fibre d'agrume est mise en contact avec l'enzyme pendant de 10 secondes à 2 heures.

9. Procédé selon la revendication 7 ou la revendication 8, dans lequel la fibre d'agrume est mise en contact avec l'enzyme après l'étape c).

10. Procédé selon l'une quelconque des revendications 7 à 9, dans lequel l'enzyme est désactivée après avoir été mise en contact avec la fibre d'agrume.

11. Procédé selon l'une quelconque des revendications 1 à 10, dans lequel l'enzyme est une cellulase, une mannanase ou un mélange de celles-ci.

12. Utilisation de fibre d'agrume qui a été traitée avec une enzyme de glycosidase pour promouvoir la stabilisation d'une pâtisserie congelée.

13. Utilisation selon la revendication 12, dans laquelle l'enzyme est une cellulase, une mannanase ou un mélange de celles-ci.

14. Utilisation selon la revendication 12 ou la revendication 13, dans laquelle la pâtisserie congelée est une crème glacée.
